# EUROPEAN PATENT APPLICATION

(11) **EP 2 590 117 A1**
(43) Date of publication of application: **08.05.2013**
(21) Application number: 12191240.6
(22) Date of filing: 05.11.2012
(51) Int. Cl.: G06Q 10/00, G06F 17/27

(54) **Knowledge based parsing**

(30) Priority: 03.11.2011 US 201113288942
(71) Applicant: Microsoft Corporation, Redmond, WA 98052 (US)
(72) Inventor: Malka, Joseph, Redmond, WA 98052-6399 (US); Hudis, Efim, Redmond, WA 98052-6399 (US); Raviv, Meir, Redmond, WA 98052-6399 (US); Haiby-Weiss, Neta, Redmond, WA 98052-6399 (US); Novik, Gal, Redmond, WA 98052-6399 (US); Ziklik, Elad, Redmond, WA 98052-6399 (US); Schachter, Yifat, Redmond, WA 98052-6399 (US)
(74) Representative: Grünecker, Kinkeldey, Stockmair & Schwanhäusser

(57) **Abstract**

The subject disclosure generally relates to parsing unstructured data based on knowledge of domains related to the unstructured data. A domain identification component can identify a set of domains related to a term in a data set. An inspection component can identify unmatched words, and unmatched related domains. A correlation component can compare the unmatched words to known values for the unmatched domains, and a manager component can match the unmatched words with the unmatched domains based on the comparison. In addition, combinations of the words can be generated based on a set of predetermined rules, and compared to the unmatched domains. Furthermore, delimiter based parsing can be employed to augment the knowledge based parsing.

## Description

### TECHNICAL FIELD

The subject disclosure relates to data organization, and more particularly to parsing unstructured data based on knowledge related to the data.

### BACKGROUND

In the domain of data quality and organization, there are widespread difficulties related to unstructured data. Organizing and structuring unstructured data in a manner that makes the data useful for a particular process has been an exceptionally difficult task. Unstructured data often comes packaged in objects that are a mix of structured and unstructured data. Part of the difficulty lies in the various forms in which unstructured data can be packaged, including books, journals, documents, metadata, health records, media, files, and unstructured text such as the body of an e-mail message, Web page, or word processor document, and so on. Unstructured data sources, by nature, have large variances, and developing a uniform way of handling them has proven to be challenging. As a result, there are few tools on the market today that can successfully transform unstructured data into intelligent and actionable data.

There is a growing consensus that semi-structured and unstructured data sources contain useful information that would be desirable for use in business, academic, intelligence, and operational endeavors. Some business organizations have estimated that well over a majority of useable business information originates in semi-structured or unstructured form. In addition, data growth is expected to continue at a rapid pace, and the growth of unstructured data is expected far exceed the growth of structured data.

The above-described deficiencies of today's techniques are merely intended to provide an overview of some of the problems of conventional systems, and are not intended to be exhaustive. Other problems with conventional systems and corresponding benefits of the various non-limiting embodiments described herein may become further apparent upon review of the following description.

### SUMMARY

A simplified summary is provided herein to help enable a basic or general understanding of various aspects of exemplary, non-limiting embodiments that follow in the more detailed description and the accompanying drawings. This summary is not intended, however, as an extensive or exhaustive overview. Instead, the sole purpose of this summary is to present some concepts related to some exemplary non-limiting embodiments in a simplified form as a prelude to the more detailed description of the various embodiments that follow.

In one or more embodiments, systems and methods are provided for parsing unstructured data based on knowledge of domains related to the unstructured data. In accordance therewith, a method is provided that includes inspecting a term, determining a set of domains related to the term, identifying a set of word-grams based on a set of unmatched words included in the term, comparing a word-gram in the set of word-grams to a set of known domain values for at least one unmatched domain in the set of domains, determining that the word-gram is within a predetermined threshold of at least one known domain value for the at least one unmatched domain, and in response to the word-gram being within the predetermined threshold of the at least one known domain value, associating the word-gram with the at least one unmatched domain.

In another embodiment, a system is provided that includes a domain identification component configured to determine a set of domains related to a term, an examination component configured to inspect the term, and identify a set of word-grams based on a set of unmatched words included in the term, a correlation component configured to compare a word-gram in the set of word-grams to a set of known domain values for at least one unmatched domain in the set of domains related to the term, and determine the word-gram is within a predetermined threshold of at least one known domain value in the set of known domain values, and a manager component configured to associate the word-gram with the at least one unmatched domain, in response to the word-gram being within the predetermined threshold of the at least one known domain value.

In yet another embodiment, a computer-readable storage medium is provided that includes computer-readable instructions that, in response to execution by a computing system, cause the computing device including at least one processor to perform operations, including inspecting a data set, identifying a set of terms in the data set, identifying a set of words in a term in the set of terms, identifying a set of unmatched words in the set words, wherein unmatched words are not associated with a domain, determining a set of domains related to the term, determining a set of unmatched domains included in the set of domains, wherein unmatched domains are not associated with a word in the set of words, in response to there being a set of unmatched words and a set of unmatched domains, generating a set of word-grams based on the set of unmatched words, comparing a word-gram in the set of word-grams to a set of domain values for at least one unmatched domain in the set of unmatched domains, matching the word-gram to at least one known domain value in the set of known domain values, and associating the word-gram with the at least one unmatched domain.

Other embodiments and various non-limiting examples, scenarios and implementations are described in more detail below.

### BRIEF DESCRIPTION OF THE DRAWINGS

Various non-limiting embodiments are further described with reference to the accompanying drawings in which:

Figure 1 illustrates a block diagram of an exemplary non-limiting system that can parse data based on knowledge;

Figure 2 illustrates a block diagram of an exemplary non-limiting system that can parse data based on knowledge;

Figure 3 illustrates a block diagram of an exemplary non-limiting system that can parse data based on knowledge;

Figure 4 illustrates a block diagram of an exemplary non-limiting system that employs knowledge and delimiter based parsing;

Figure 5 is graphical representation of an example knowledge based parsing;

Figure 6 is graphical representation of an example knowledge based parsing;

Figure 7 is graphical representation of an example knowledge and delimiter based parsing;

Figure 8 is graphical representation of an example knowledge and delimiter based parsing;

Figure 9 illustrates a block diagram of an exemplary non-limiting system that provide additional features or aspects in connection with knowledge based parsing;

Figures 10 is an exemplary non-limiting flow diagram for knowledge and delimiter based parsing;

Figure 11-14 are exemplary non-limiting flow diagrams for composite knowledge and delimiter based parsing;

Figure 15 is a block diagram representing exemplary non-limiting networked environments in which various embodiments described herein can be implemented; and

Figure 16 is a block diagram representing an exemplary non-limiting computing system or operating environment in which one or more aspects of various embodiments described herein can be implemented.

### DETAILED DESCRIPTION

### OVERVIEW

By way of an introduction, the subject matter disclosed herein relates to various embodiments relating to knowledge based parsing. In particular, the subject matter can provide a mechanism for determining a set of domains, or semantic data types, that are associated with a data source. Unstructured, or semi-structured, terms included in the data source can be identified, and words in the unstructured term that are not matched with a domain in the set of domains (unmatched words) can be identified. In addition, domains in the set of domains that are not matched with a word in the term (unmatched domains) can be identified. The unmatched words can be correlated with known values for the unmatched domains to determine matches.

In addition, aspects of the disclosed subject matter can generate combinations of the unmatched words, or word-grams. The word-grams can be correlated with the unmatched domains to determine if there are combinations of the unmatched words that match an unmatched domain. Moreover, aspects of the disclosed subject matter can provide for matching unmatched words and unmatched domains using delimiters or predetermined rules.

### INTRODUCTION TO DATA PARSING

Certain subject matter disclosed herein is directed to parsing data that is unstructured or semi-structured. Accordingly, examples associated with data parsing can be helpful in understanding some aspects, features, or embodiments of the present disclosure.

Parsing data is separating a data source, and assigning parts of it to domains. Typically, data parsing is done based on delimiters, such as, comma separated values (CSV). Additionally, parsing is often accomplished based on the order in which objects appear in a data source. Knowledge based parsing is the ability to parse data based on knowledge, and not just on delimiter or order. Parsing is particularly relevant when the data source contains complex data mapped to a composite domain, and parsing enables cleansing of the data.

### KNOWLEDGE BASED PARSING

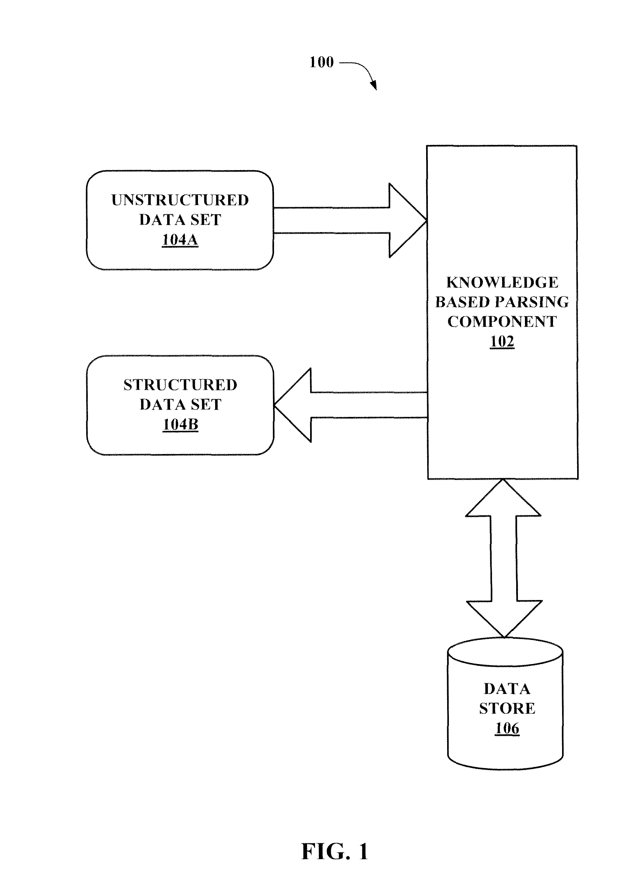

Referring now to the drawings, with reference initially to **FIG. 1****,** system 100 that can parse data based on knowledge is shown in accordance with various aspects described herein. Generally, system 100 can include a knowledge based parsing component 102 that, as with all components described herein can be stored in a computer readable storage medium. The knowledge based parsing component 102 is configured to examine, analyze, or otherwise inspect an unstructured data set 104A. The unstructured data set 104A can include, but is not limited to, a collection or compilation of data, such as books, documents, metadata, records, media, files, communications, web pages, and so forth. Furthermore, the unstructured data set 104A can be comprised of a set of terms, wherein a term is comprised of a set of words, including but not limited to, strings, characters, numerals, and so forth. A subset of unmatched words, included in the set of words, can include words that do not have a predefined data model (e.g., data structure).

The knowledge based parsing component 102 is further configured to determine a set of domains (e.g., semantic data types) related to a term, and determine a subset of unmatched domains, included in the set of domains, that are not associated with at least one word in the set of words. Furthermore, the knowledge based parsing component can compare the subset of unmatched words to a set of known values for the subset of unmatched domains, and match a word in the subset of unmatched words with an unmatched domain in the subset of unmatched domains based on the comparison with the set of known values. For example, an address domain can be related to a term in the unstructured data set 104A. The knowledge based parsing component 102 can compare unmatched words, and combinations of unmatched words, included in the term to a set of known values related to addresses (e.g., the address domain), such as street names, street numbers, etc. and match one or more unmatched words in the term to the address domain based on comparison with the set of known values.

It is to be appreciated that the unstructured data set 104A, and the structured data set 104B can be disparate, as illustrated, or related in practice. For example, the knowledge based parsing component 102 can convert the unstructured data set 104A into a structured data set 104B. It is to be further appreciated that the set of known values regarding known domains can be maintained in a plurality of locations, including, but not limited to, a data store 106, or a cloud based storage.

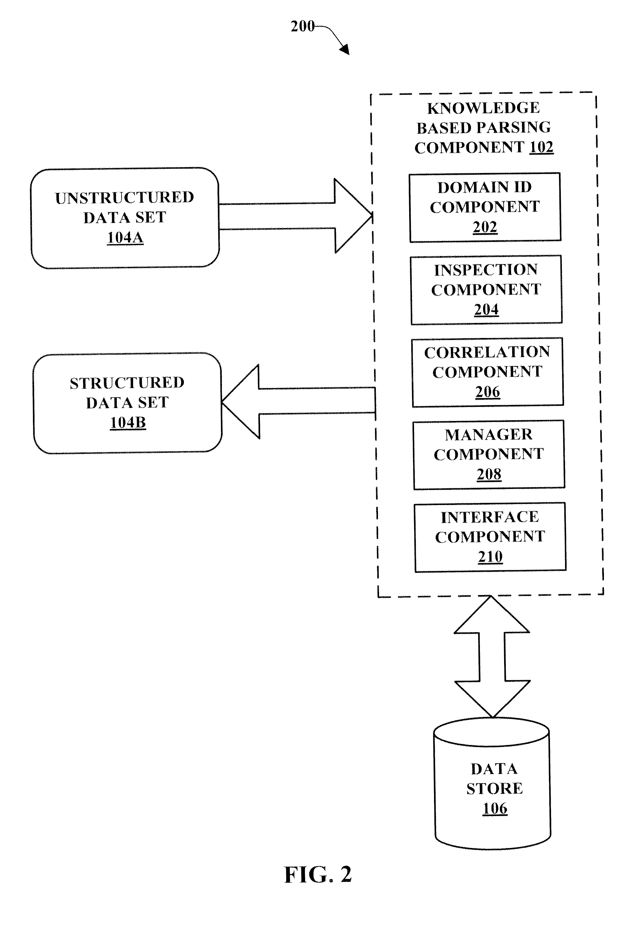

Turning to **FIG. 2****,** system 200 that can parse data based on knowledge is shown in accordance with various aspects described herein. The knowledge based parsing component 102 includes a domain identification component 202, an inspection component 204, a correlation component 206, a manager component 208, and an interface component 210. As discussed previously, the knowledge based parsing component 102 is configured to examine, analyze, or otherwise inspect an unstructured data set 104A, and generate a structured data set 104B. As discussed supra, the unstructured data set 104A can contain a set of terms. A term is comprised of a set of words, and can be unstructured, structured, or semi-structured.

The domain identification component 202 is configured to determine a set of domains related to a term in the unstructured data set 104A, and determine a subset of unmatched domains, included in the set of domains, that are not associated with at least one word in the term. The domain identification component 202 can determine the set of domains based on prior knowledge, information included in the unstructured data set 104A, or can dynamically determine the set of known domains based on the inspection of the unstructured data set 104A.

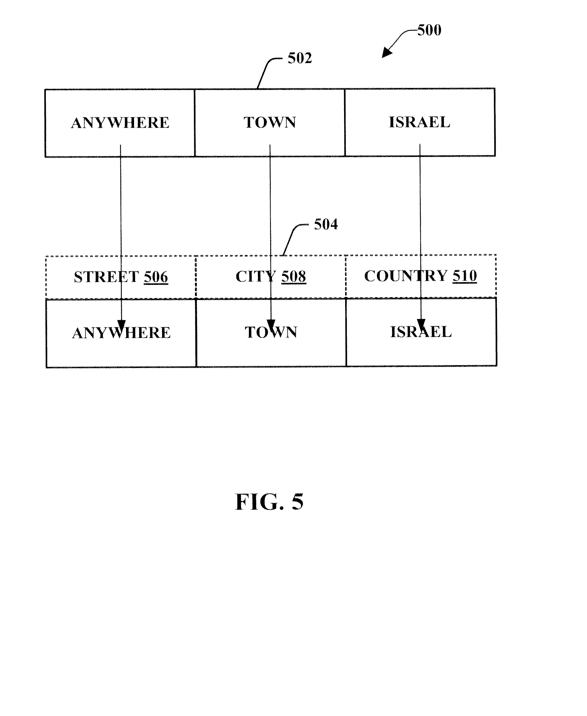

The inspection component 204 is configured to identify a set of words in a term, and determine a subset of unmatched words, included in the set of words, that are not associated with at least one domain in the set of domains (e.g., unstructured words). The inspection component is further configured to identify a set of words-grams (e.g., combinations of words) based on the subset of unmatched words. For example, the inspection component 204 can determine that a term in the unstructured data set 104A includes four words, wherein three of the four words are not associated with a domain in the set of known domains. The inspection component 204 can identify, for example, six word-grams based on the three unassociated words included in the unstructured data set 104A (discussed in greater detail with reference to FIGS. 5-8).

The correlation component 206 is configured to compare the set of word-grams identified by the inspection component 204 with a set of known domain values for the set of domains. For example, one domain related to a term can be a female name domain, and the set of known domain values related to the female name domain can include a set of common female names. The correlation component 206 can compare the set of word-grams to the set of common female names in order to determine if a word-gram in the set of word-grams matches a name (e.g., value) in the set of common female names.

The manager component 208 is configured to associate word-grams with matching domains based on the comparison performed by the correlation component. Continuing with the previous example, if the set of word-grams includes "Thursday," "Ohio," and "Courtney," then the manager component 208 can associate "Courtney" with the female name domain, if the correlation component 206 determines that "Courtney" matches a common female name in the set of known domain values. The manager component 208 can be further configured to associate the first matching word-gram determined by the correlation component 206 with the domain. Additionally, the manager component can instruct the correlation component 206 to stop comparing the word-grams to the domain. For example, if the correlation component 206 determines that "Courtney" matches a common female name, then the manager component 208 can associate "Courtney" with the female name domain, and instruct the correlation component 206 to stop comparing the remaining word-grams (e.g., "Thursday" and "Ohio") to the female name domain.

The interface component 210 includes any suitable and/or useful adapters, connectors, channels, communication paths, *etc.* to integrate the system 200 into virtually any operating and/or database system(s). Moreover, the interface component 210 can provide various adapters, connectors, channels, communication paths, etc., that provide for interaction with the system 200. It is to be appreciated that although the interface component 210 is illustrated as incorporated into the knowledge based parsing component 102, such implementation is not so limited. For instance, the interface component 210 can be a stand-alone component to receive or transmit data in relation to the system 200. In particular, the interface component 210 can receive any data relating to knowledge based parsing.

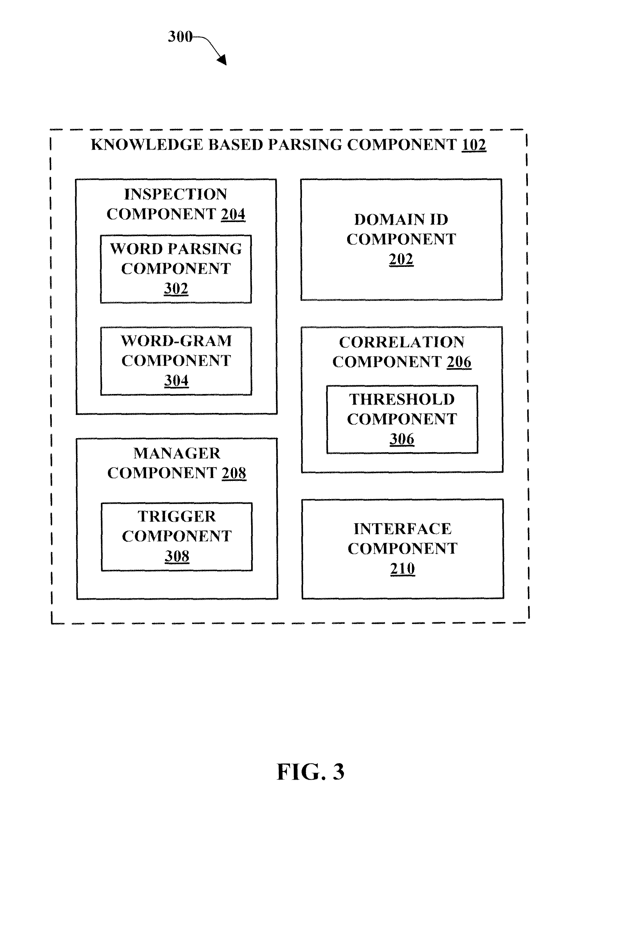

**FIG. 3** illustrates a system 300 that can parse data based on knowledge in accordance with various aspects described herein. As discussed in reference to FIG. 2, the knowledge based parsing component 102 is configured to examine, analyze, or otherwise inspect the unstructured data set 104A, and generate the set of structured data 104B. The knowledge based parsing component 102 includes the domain identification component 202, the inspection component 204, the correlation component 206, the manager component 208, and the interface component 210.

As discussed supra, the inspection component 204 is configured to identify a set of words in a term in the unstructured data set 104A, determine a subset of unmatched words, in the set of words, that are not associated with a domain in the set of domains, and identify a set of words-grams based on the subset of words. The inspection component 204 can include a word parsing component 302, and a word-gram component 304.

The word parsing component 302 is configured to identify a term in the unstructured data set 104A, and divide, separate, or parse the term into the set of words. It is to be appreciated that the set of words can include, but is not limited to, strings, characters, numerals, and so forth. For example, a term can be "123 Anywhere Town Israel," and the word parsing component 302 can parse the term into four individual words "123", "Anywhere," "Town," and "Israel." The word parsing component 302 can parse terms based on delimiters, such as spaces, commas, etc., or can parse the term based on a set of predefined rules. For instance, the word parsing component 302 can include a rule that indicates that in a given data set, periods are used to separate words in a term, and the word parsing component 302 can parse the term based on an identification of periods.

As discussed supra, the domain identification component 202 is configured to determine a set of domains related to a term in the unstructured data set 104A, and the inspection component 204 is configured to determine a subset of unmatched words that are not associated with a domain in the set of domains. The word-gram component 304 is configured to identify, determine, or otherwise generate a set of word-grams based on the subset of unmatched words. Word-grams can be comprised of permutations or combinations of unmatched words based on a set of predefined rules. For example, the word-gram component 304 can determine a quantity, S, of words in the subset of words, where S is an integer greater than or equal to one, and generate word-grams having length S, S-1,..., 1 by combining the words included in the subset of unmatched words, while maintaining their order relative to one another in the term from left-to-right. Returning to the previous example, for the term "123 Anywhere Town Israel," the word-gram component 304 can determine that S is equal to four, and generate the set of word-grams for S, S-1, S-2 and S-3, as shown in Table 1.

**-Table 1**

| **Length** | **Word-Grams** | | | |
|---|---|---|---|---|
| S | 123 Anywhere Town Israel | | | |
| S-1 | 123 Anywhere Town | Anywhere Town Israel | | |
| S-2 | 123 Anywhere | Anywhere Town | Town Israel | |
| S-3 | 123 | Anywhere | Town | Israel |

It is to be appreciated that the foregoing is but one example of the set of predefined rules, and the word-gram component 304 can generate the set of word-grams based on a plurality of rules, for example, generating all possible combinations or permutations of words included in the subset of unmatched words. Additionally, if a term contains words found in a language that is read from right-to-left, then the word-gram component 304 can generate word-grams while maintaining an order of words relative to one another in a term from right-to-left.

As discussed supra, the correlation component 206 is configured to compare the set of word-grams with a set of known domain values for the set of unmatched domains. For example, the set of known domain values can include a set of city names for a city domain, a set of people names for a name domain, a set of programs for a source domain, and so forth. The correlation component 206 can include a threshold component 306 that is configured to determine if a word-gram in the set of word-grams is within a predetermined threshold of a known domain value. For example, a female name domain can be included in the unstructured data set 104A, and "Cortney" can be a word-gram generated from a term in the unstructured data set 104A. The threshold component 306 can determine that "Cortney" is within a predetermined threshold of a known female domain value "Courtney." The threshold component 306 can determine that the word-gram is within the predetermined threshold based on a plurality of factors, including but not limited to, text analytics, linguistic similarity, semantics, syntax, and/or string matching.

The manager component 208 is configured to match or associate word-grams within the predetermined threshold of a known domain value, with the domain corresponding to the known domain value. Continuing with the previous example, the manager component 208 can associate "Cortney" with the female name domain, in response to the threshold component 306 determining that "Cortney" was within the predetermined threshold of "Courtney." The manager component 208 can be further configured to determine if there is more than one word-gram within the predetermined threshold of the known domain, and associate the word-gram having the longest length (S), with the known domain. Additionally or alternatively, the manager component 208 can associate the word-gram having the highest match with the known domain.

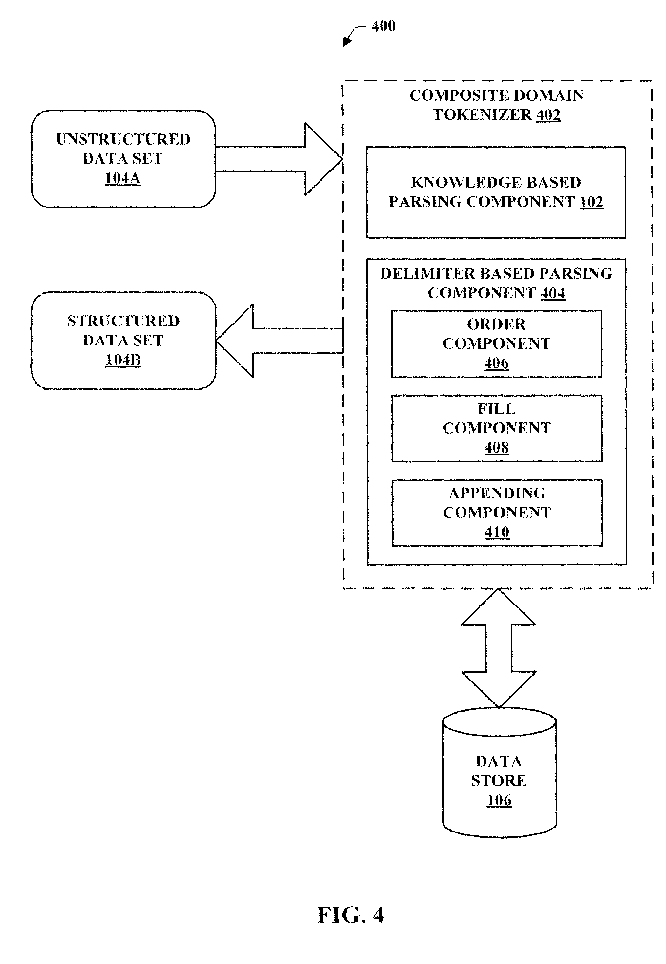

In addition, the manager component 208 can include a trigger component 308 that is configured to determine if a word in the subset of unmatched words is not within the predetermined threshold of at least one known domain value for the set of unmatched domains, and include the word in a set of unmatched words (e.g., leftovers). The trigger component 308 can be further configured to determine that there is not at least one word in the subset of unmatched words that falls within the predetermined threshold of the set of known values for a domain in the set of unmatched domains, and can include domains in the set of domains in a set of unmatched domains. In addition, the trigger component 308 can be further configured to trigger delimiter based parsing for the set of unmatched words and/or the set of unmatched domains (discussed in greater detail in reference to FIGS. 4-8).

With reference to **FIG. 4****,** a system 400 that employs knowledge and delimiter based parsing is shown in accordance with various aspects described herein. A composite domain tokenizer 402 includes a knowledge based parsing component 102, and a delimiter based parsing component 404. As discussed supra, the knowledge based parsing component 102 is configured to determine a set of domains related to a term in the unstructured data set 104A, identify a set of unmatched words included in the term, generate a set of word-grams for the set of unmatched words, compare the word-grams to known values for domains in the set of domains, and associate word-grams that are within a predetermined threshold of a known value with the corresponding domain. As discussed supra, the knowledge based parsing component 102 can trigger delimiter based parsing for a set of unmatched words, or unmatched domains.

The delimiter based parsing component 404 is configured to associate words in the set of unmatched words with a domain in the set of domains, and to associate domains in the set of unmatched domains with a value. The delimiter based parsing component 404 includes an order component 406. The order component 406 is configured to determine there is at least one unmatched word in the set of unmatched words, and at least one unmatched domain in the set domains. In response to there being at least one unmatched word in the set of unmatched words, and at least one unmatched domain in the set domains, the order component 406 is configured to parse the set of unmatched domains based on the order of the unmatched words relative to one another in the term. For example, the order component 406 can begin with the left-most unmatched word, match it to the next unmatched domain, and repeat matching the unmatched words to the unmatched domains in order until the set of unmatched words is empty, or the set of unmatched domains is empty.

The delimiter based parsing component can further include a fill component 408 that is configured to determine there is not an unmatched word in the set of unmatched words, and there is at least one unmatched domain in the set domains. In response to there not being at least one unmatched word remaining in the set of unmatched words, and there being at least one unmatched domain in the set domains, the fill component 408 is configured to associate a predetermined value with the domains in the set of unmatched domains. For example, the fill component 408 can associate a null value with the domains included in the set of unmatched domains.

Furthermore, the delimiter based parsing component 404 can include an appending component 410. The appending component 410 is configured to determine there is at least one unmatched word in the set of unmatched words, and that there is not at least one unmatched domain in the set domains. In response to there being at least one unmatched word in the set of unmatched words, and there not being at least one unmatched domain in the set domains, the appending component 410 is further configured to attach an unmatched word to a word associated with a domain (e.g., matched word) positioned in the term to the left of the unmatched word in the term. Furthermore, if there is not a matched word positioned to the left of the unmatched word in the term, then the appending component 410 can attach unmatched words to a matched word positioned to the right of the unmated word in the term. It is to be appreciated that the foregoing represents but a few examples of delimiter based parsing, and additional techniques for delimiter based parsing may be within the scope of this application.

**FIG. 5** illustrates an example of knowledge based parsing in accordance with various aspects described herein. As illustrated, an unstructured term 502 can be "Anywhere Town Israel," and a set of domains 504 related to the term 502 can be determined. For example, the set of domains 504 can include a street domain 506, a city domain 508, and a country domain 510. The unstructured term 502 is comprised of 3 words (e.g., "Anywhere," "Town," and "Israel"). As discussed previously, S is equal to 3 for the term 502, and word-grams of length S, S-1, and S-2 can be generated for the term 502, as shown in the Table 2.

**-Table 2**

| **Length** | **Word-Grams** | | |
|---|---|---|---|
| S | Anywhere Town Israel | | |
| S-1 | Anywhere Town | Town Israel | |
| S-2 | Anywhere | Town | Israel |

Word-grams within a predetermined threshold of a known value for a domain can be associated with the domain. For example, for the country domain 510 the set of known values can include a set of country names. The word-grams in the set of word-grams for the term 502 (See Table 2) can be compared to the set of recognized countries, and it can be determined that "Israel" is within the predetermined threshold of a country in the set of country names, and can be associated with the country domain 510. Similarly, "Anywhere" can be associated with the street domain 506, and "Town" can be associated with the city domain 508. In the foregoing example, after the knowledge based parsing, the term 502 does not contain an unmatched word, and the set of domains 504 does not contain an unmatched domain. Therefore, delimiter based parsing is not triggered.

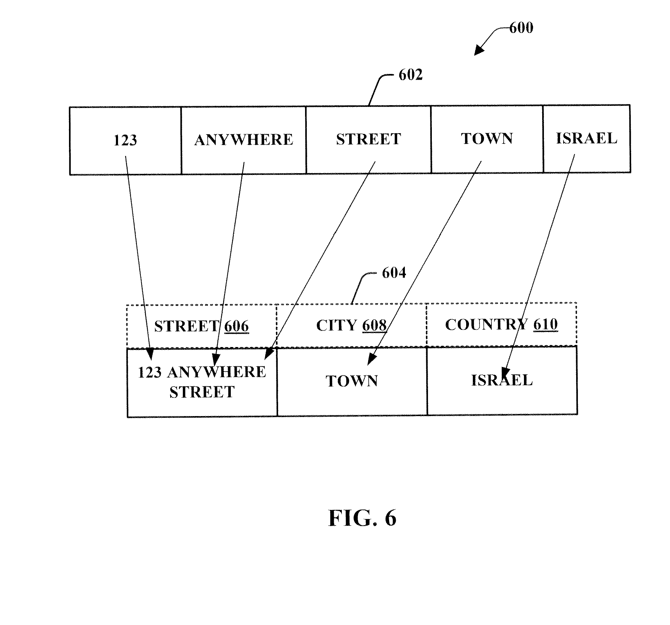

**FIG. 6** illustrates an example of knowledge based parsing in accordance with various aspects described herein. As illustrated, an unstructured term 602 can be "123 Anywhere Street Town Israel," and a set of domains 604 related with the unstructured term 602 can be determined. For example, the set of domains 604 can include a street domain 606, a city domain 608, and a country domain 610. The unstructured term 602 is comprised of 5 words (e.g., "123," "Anywhere," "Street," "Town," and "Israel"). As discussed previously, S is equal to 5 for the unstructured term 602, and word-grams of length S, S-1, S-2, S-3 and S-4 can be generated for the unstructured term 602, as shown in the Table 3.

**- Table 3**

| **Length** | **Word-Grams** | | | | |
|---|---|---|---|---|---|
| S | 123 Anywhere Street Town Israel | | | | |
| S-1 | 123 Anywhere Street Town | Anywhere Street Town Israel | | | |
| S-2 | 123 Anywhere Street | Anywhere Street Town | Street Town Israel | | |
| S-3 | 123 Anywhere | Anywhere Street | Street Town | Town Israel | |
| S-4 | 123 | Anywhere | Street | Town | Israel |

As discussed supra, word-grams within a predetermined threshold of a known value for a domain can be associated with the domain. For example, for the street domain 606 the set of known values can include a set of street addresses. The word-grams in the set of word-grams for the unstructured term 602 (See Table 2) can be compared to the set of recognized countries, and it can be determined that "123 Anywhere Street" is within the predetermined threshold of a street address in the set of recognized street addresses, and can be associated with the street domain 606. As discussed supra, if "123 Anywhere Street" is the word-gram within the predetermined threshold having the longest length (S), then it will be associated with the street domain 606, instead of additional word-grams that may be also be within the predetermined threshold, such as, "123 Anywhere," "Anywhere St.," "123," "Anywhere," or "Street". Additionally or alternatively, the word-gram having the highest match to the street domain 606 can be associated with the street domain 606. In the foregoing example, after the knowledge based parsing, the term 602 does not contain an unmatched word, and the set of domains 604 does not contain an unmatched domain. Therefore, delimiter based parsing is not triggered.

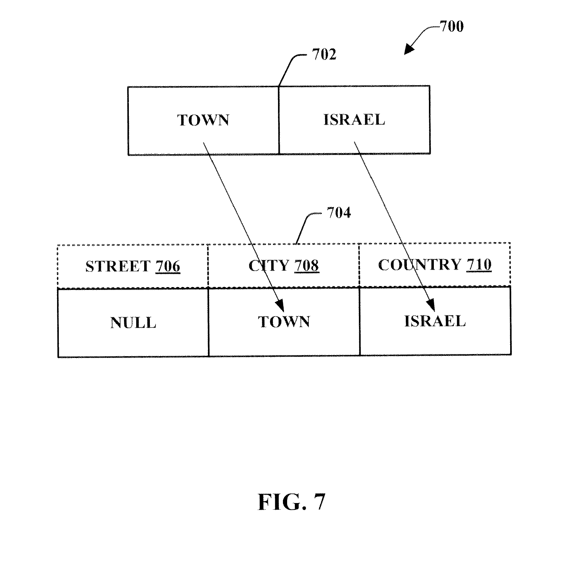

Turning now to **FIG. 7****,** an example of composite knowledge and delimiter based parsing is illustrated in accordance with various aspects described herein. As illustrated, an unstructured term 702 can be "Town Israel," and a set of domains 704 related to the unstructured term 702 can be determined. For example, the set of domains 704 can include a street domain 706, a city domain 708, and a country domain 710. The unstructured term 702 is comprised of 2 words (e.g., "Town," and "Israel"). As discussed previously, S is equal to 2 for the unstructured term 702, and word-grams of length S and S-1 can be generated for the unstructured term 702, as shown in the Table 4.

**- Table 4**

| **Length** | **Word-Grams** | |
|---|---|---|
| S | Town Israel | |
| S-1 | Town | Israel |

As discussed supra, word-grams within a predetermined threshold of a known value for a domain can be associated with the domain. Therefore, "Town" can be associated with the city domain 708, and "Israel" can be associated with the country domain 710. In the foregoing example, after the knowledge based parsing, there are no unmatched words in the unstructured term 702, but there are unmatched domains in the set of domains 704 (e.g., street domain 706). Therefore, delimiter based parsing can be triggered. As discussed supra, in response to there being no unmatched words in the unstructured term 702, and there being unmatched domain in the set of domains 704, then the unmatched domains can be filled with a predetermined value, such as a null value.

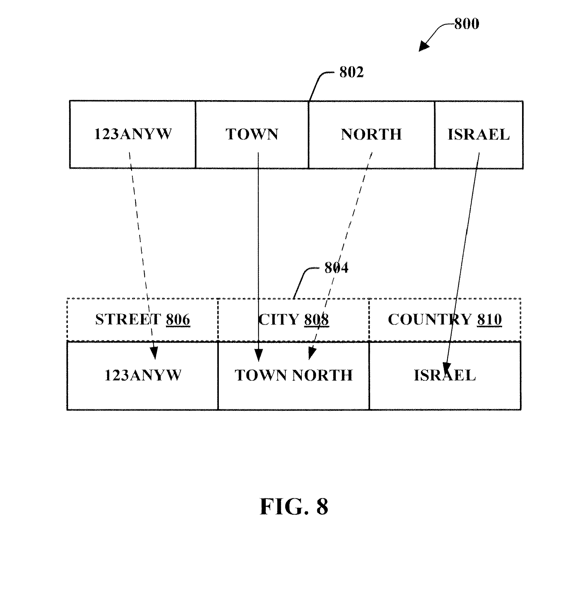

Referring to **FIG. 8****,** illustrated is an example of composite knowledge and delimiter based parsing in accordance with various aspects described herein. As illustrated, an unstructured term 802 can be "123ANYW TOWN NORTH ISRAEL," and a set of domains 804 associated with the unstructured term 802 can be determined. For example, the set of domains 804 can include a street domain 806, a city domain 808, and a country domain 810. The unstructured term 802 is comprised of 4 words (e.g., "123Anyw," "Town," "North," and "Israel"). As discussed previously, S is equal to 4 for the unstructured term 802, and word-grams of length S, S-3, S-2 and S-1 can be generated for the unstructured term 802, as shown in the Table 5.

**- Table 5**

| **Length** | **Word-Grams** | | | |
|---|---|---|---|---|
| S | 123Anyw Town North Israel | | | |
| S-1 | 123Anyw Town North | Town North Israel | | |
| S-2 | 123Anyw Town | Town North | North Israel | |
| S-3 | 123Anyw | Town | North | Israel |

As discussed supra, word-grams within a predetermined threshold of a known value for a domain can be associated with the domain. Therefore, "Town" can be associated with the city domain 808, and "Israel" can be associated with the country domain 810. In this example, two words in the set of words, "123Anyw" and "North", may not be within the predetermined threshold of a known value for a domain. For example, the words "123Anyw" and "North" may have been the result of incorrect data entry. In the foregoing example, after the knowledge based parsing, there are two unmatched words in the unstructured term 802 (e.g., "123Anyw," and "North", and there is an unmatched domain in the set of domains 804 (e.g., street domain 806). Therefore, delimiter based parsing can be triggered. As discussed supra, in response to there being unmatched words in the unstructured term 802, and there being an unmatched domain in the set of domains 804, then the first unmatched word, "123Anyw," can be associated with the first unmatched domain, the street domain 806. After which there is one unmatched word (e.g., "North") in the unstructured term 802, and there are no unmatched domains in the set of domains 804. In response to there being an unmatched word, and not being any unmatched domains, then the unmatched word is appended or attached to the word positioned to the left of the unmatched word in the unstructured term 802. As illustrated, the word matched with a domain to the left of the unmatched word is "Town." Therefore, "North" can be attached to "Town," and also associated with the city domain 808.

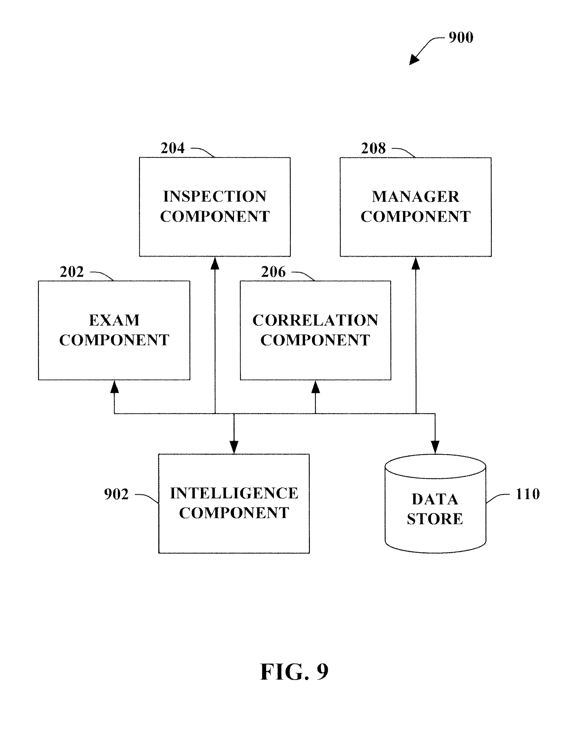

Referring now to **FIG. 9****,** system 900 that can provide for or aid with various inferences or intelligent determinations is depicted. Generally, system 900 can include all or a portion of the domain identification component 202, the inspection component 204, the correlation component 206, and the manager component 208 as substantially described herein. In addition to what has been described, the above-mentioned components can make intelligent determinations or inferences. For example, domain identification component 202 can intelligently determine or infer a set of domains associated with an unstructured data set 104A.

Likewise, inspection component 204 can also employ intelligent determinations or inferences in connection with generating a set of word-grams. In addition, correlation component 206 can intelligently compare a set of word-grams with a set of known domain values, and determine if word-grams are within predetermined thresholds of known domain values. Furthermore, manager component 208 can intelligently associate word-grams with matching domains. Any of the foregoing inferences can potentially be based upon, e.g., Bayesian probabilities or confidence measures or based upon machine learning techniques related to historical analysis, feedback, and/or other determinations or inferences.

In addition, system 900 can also include intelligence component 902 that can provide for or aid in various inferences or determinations. In particular, in accordance with or in addition to what has been described *supra* with respect to intelligent determination or inferences provided by various components described herein. For example, all or portions of the domain identification component 202, the inspection component 204, the correlation component 206, and the manager component 208 (as well as other components described herein) can be operatively coupled to intelligence component 902. Additionally or alternatively, all or portions of intelligence component 902 can be included in one or more components described herein. Moreover, intelligence component 902 will typically have access to all or portions of data sets described herein, such as data store 110.

Accordingly, in order to provide for or aid in the numerous inferences described herein, intelligence component 902 can examine the entirety or a subset of the data available and can provide for reasoning about or infer states of the system, environment, and/or user from a set of observations as captured via events and/or data. Inference can be employed to identify a specific context or action, or can generate a probability distribution over states, for example. The inference can be probabilistic - that is, the computation of a probability distribution over states of interest based on a consideration of data and events. Inference can also refer to techniques employed for composing higher-level events from a set of events and/or data.

Such inference can result in the construction of new events or actions from a set of observed events and/or stored event data, whether or not the events are correlated in close temporal proximity, and whether the events and data come from one or several event and data sources. Various classification (explicitly and/or implicitly trained) schemes and/or systems (*e.g.*, support vector machines, neural networks, expert systems, Bayesian belief networks, fuzzy logic, data fusion engines...) can be employed in connection with performing automatic and/or inferred action in connection with the claimed subject matter.

A classifier can be a function that maps an input attribute vector, x = (x1, x2, x3, x4, *xn*), to a confidence that the input belongs to a class, that is, f(x) = *confidence*(*class*). Such classification can employ a probabilistic and/or statistical-based analysis (e.g., factoring into the analysis utilities and costs) to prognose or infer an action that a user desires to be automatically performed. A support vector machine (SVM) is an example of a classifier that can be employed. The SVM operates by finding a hyper-surface in the space of possible inputs, where the hyper-surface attempts to split the triggering criteria from the non-triggering events. Intuitively, this makes the classification correct for testing data that is near, but not identical to training data. Other directed and undirected model classification approaches include, e.g., naïve Bayes, Bayesian networks, decision trees, neural networks, fuzzy logic models, and probabilistic classification models providing different patterns of independence can be employed. Classification as used herein also is inclusive of statistical regression that is utilized to develop models of priority.

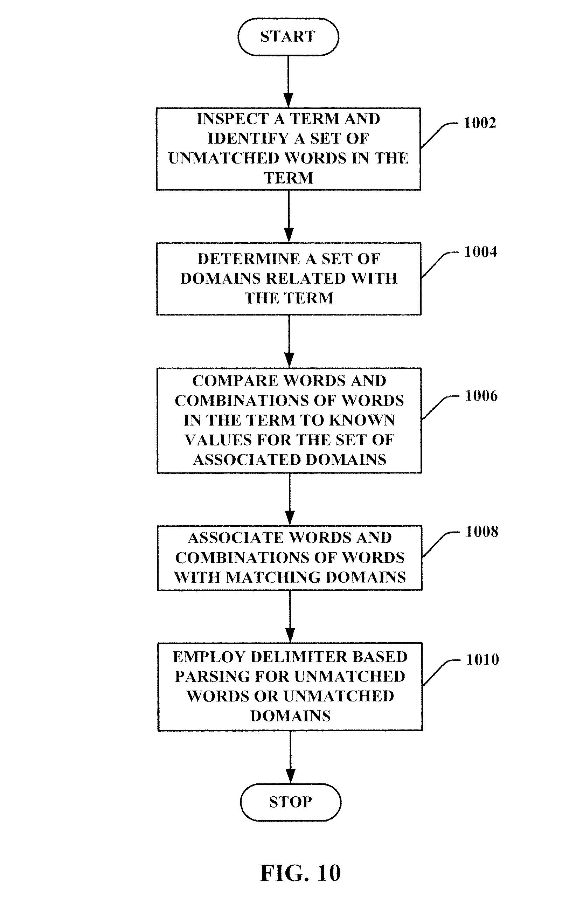

In view of the example systems described supra, methods that may be implemented in accordance with the disclosed subject matter may be better appreciated with reference to the flow charts of FIGS. 10-14. While for purposes of simplicity of explanation, the methods are shown and described as a series of blocks, it is to be understood and appreciated that the claimed subject matter is not limited by the order of the blocks, as some blocks may occur in different orders and/or concurrently with other blocks from what is depicted and described herein. Moreover, not all illustrated blocks may be required to implement the methods described hereinafter.

Turning now to **FIG. 10**, illustrated is an example method 1000 for knowledge based parsing in accordance various aspects described herein. Generally, at reference numeral 1002, a term can be inspected, and a set of unmatched words in the term can be identified. Unmatched words are words that are not associated with a domain (e.g., semantic data type). It is to be appreciated that the term can be structured, unstructured, or semi-structured, as discussed supra.

At reference numeral 1004, a set of domains related to the term can be determined. The set of domains can be determined based on prior knowledge, information included in the unstructured data set, or can be dynamically determined. For instance, it can be determined that the term is a composite address domain, and that a set of three domains (e.g., child domains) are associated with the term. The set of three domains can include a street domain, a city domain, and a country domain.

At reference numeral 1006, unmatched words included in the term, and combinations of the words (e.g., word-grams), can be compared with known values for the domains in the set of domains. Returning to the previous example, the set of known values for the city domain can include a set of city names, and the unmatched words, and word-grams, can be compared with the set of city names. The word-grams can be determined, identified, or otherwise generated based on a set of predetermined rules or criteria. For example, the predetermined rule can specify that the order of the words, relative to one another in the term, be maintained when generating the combinations of the words.

At reference numeral 1008, words, and word-grams, are associated with matching domains. A matching domain is a domain for which a word, or word-gram, is within a predetermined threshold of a known value for the domain. Returning to the previous example, if a word in the term is "Cleveland," then it can be within a predetermined threshold of a known value for the city domain (e.g., Cleveland), and "Cleveland" can be associated with the city domain.

At reference numeral 1010, if there are unmatched words or unmatched domains, then delimiter based parsing is employed. For example, unmatched words can be matched with unmatched domains based on order, unmatched words can be associated with domains of neighboring words associated with a domain, and/or unmatched domains can be filled with a predetermined value, such as, a null value.

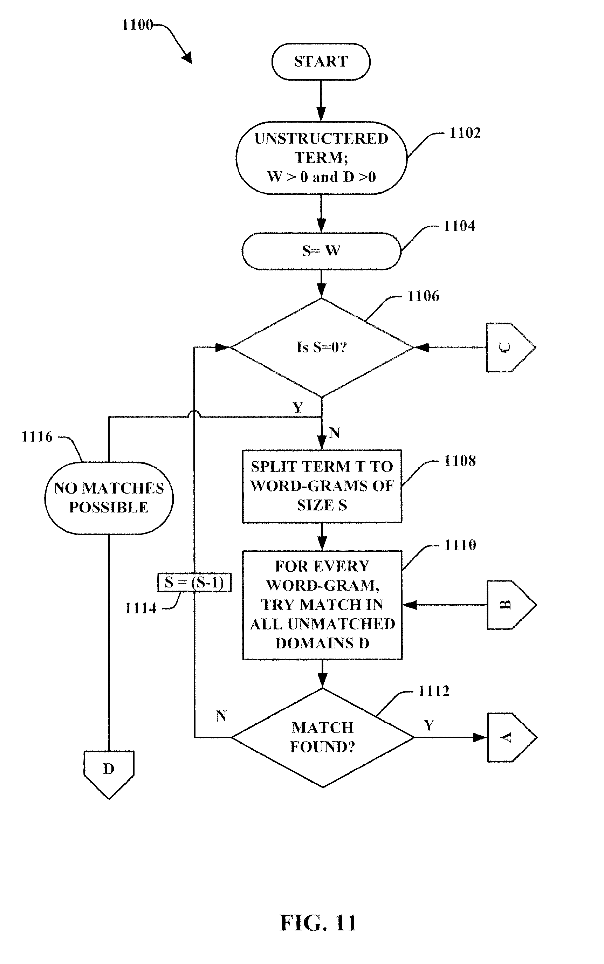

**FIGS. 11-14** collectively illustrate an example method for knowledge based parsing in accordance various aspects described herein. Referring initially to FIG. 11, generally, at reference numeral 1102, there is a term that is unstructured, or partially unstructured. The term includes a set of words, wherein the words can include strings, characters, numerals, and so forth. The term is unstructured, if a quantity of unmatched words (e.g., not associated with a domain), W, in the term is greater than zero, and a quantity of unmatched domains (e.g., not associated with a word), D, is greater than zero.

At reference numeral 1104, a word-gram length, S, is set to the number of unmatched words, W, in the term. At reference numeral 1106, a determination is made whether the word-gram length, S, is equal to zero. If the word-gram length, S, is not equal to zero (N at reference numeral 1106), then at reference numeral 1108, a set of word-grams can be generated by splitting the term is into word-grams of size S. For example, if S is equal to four and the term contains four words, then the term can be split into word-grams having length four, as shown in table 1. At reference numeral 1110, the word-grams included in the set of word-grams generated at reference numeral 1108 are compared to a set of known values for the unmatched domains, D.

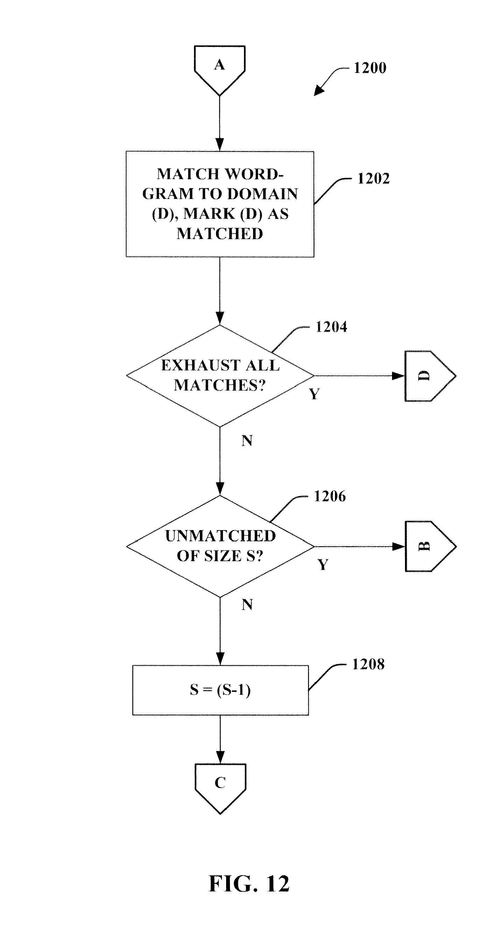

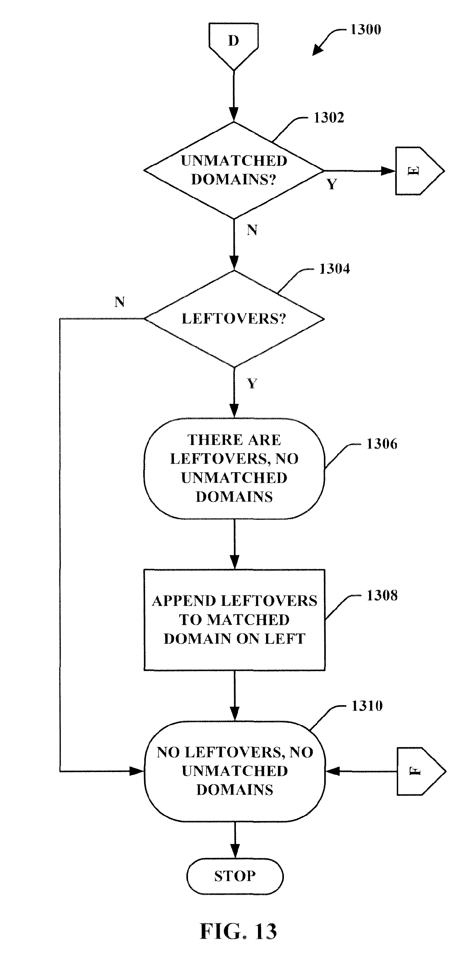

At reference numeral 1112, a determination is made whether a word-gram in the set of word-grams matches an unmatched domain. If a match has not been found (N at reference numeral 1112), then at reference numeral 1114 S is set as S minus 1, and the methodology returns to reference numeral 1106. If a match has been found (Y at reference numeral 1112), then the methodology advances to reference numeral 1202 (See FIG. 12). Returning to reference numeral 1106, if the word-gram length, S, is equal to zero, then no matches are possible at reference numeral 1116, and the methodology advances to advances to reference numeral 1302 (See FIG. 13).

Referring now to **FIG. 12**, at reference numeral 1202, in response to finding a match, at reference numeral 1112, the word-gram is matched to the domain, and the domain is marked as matched. At reference numeral 1204, a determination is made whether matches have been exhausted. The matches have been exhausted, if the quantity of unmatched domains, D, is equal to zero, or the quantity of unmatched words, W, is equal to zero. If the matches have not been exhausted (N at reference numeral 1204), then at reference numeral 1206 a determination is made whether there are any remaining word-grams of size, S. If there are not remaining word-grams of size, S (N at reference numeral 1206), then at 1208 S is set to S minus 1, and the methodology returns to reference numeral 1106.

Returning to reference numeral 1204, if the matches have been exhausted (Y at reference numeral 1204), then the methodology advances to 1302 (See FIG. 13). Returning to reference numeral 1206, f there are remaining word-grams of size, S (Y at reference numeral 1206), then the methodology returns to reference numeral I 110,

Turning now to FIG. **13,** at 1302 a determination is made whether there are unmatched domains. At reference numeral 1302, if there are not unmatched domains (N at reference numeral 1302), then a determination is made whether there are leftovers. A word is classified as a leftover, if the word does not match at least one known value for at least one of the unmatched domains. At reference numeral 1306, there are leftovers (Y at reference numeral 1304), and there are not unmatched domains (N at reference numeral 1302), then at reference numeral 1308 leftovers are appended, glued, or otherwise suffixed to a word neighboring the leftover to left in the term. For example, if a term consists of "Ohio Thursday Courtney," and the words "Ohio" and "Courtney" are matched to domains, and "Thursday" is a leftover, then "Thursday" can be appended to "Ohio," because "Ohio" neighbors "Thursday" to the left in the term. After appending the leftovers to the matched domains on the left, then at reference numeral 1310, there are no leftovers, no unmatched domains, and the term has been structured.

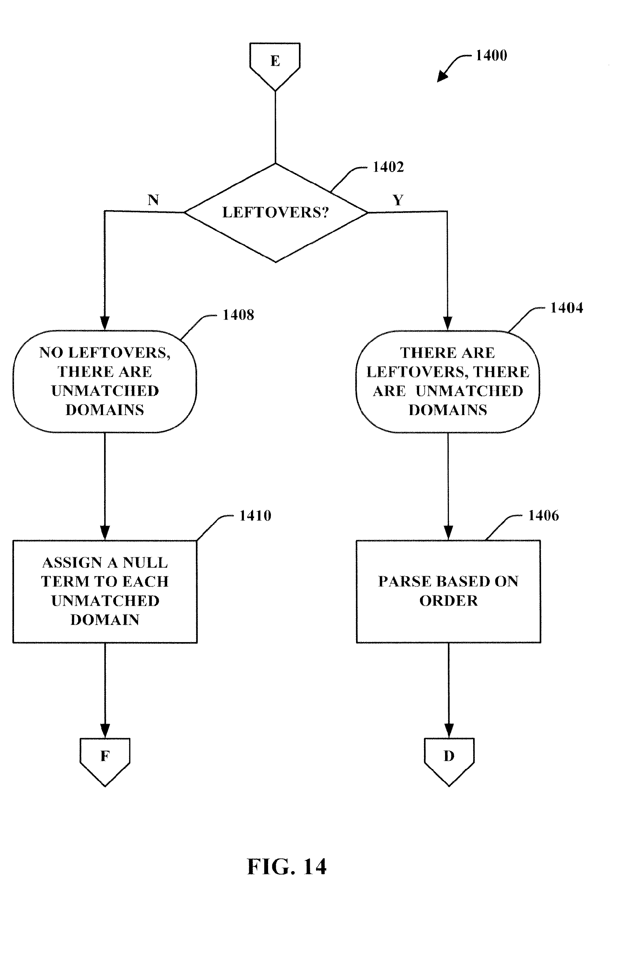

Returning to reference numeral 1302, if there are unmatched domains (Y at reference numeral 1302), then the methodology advances to reference numeral 1402 (See Fig. 14). Returning to reference numeral 1304, if there are leftovers (N at reference numeral 1304), then at reference numeral 1310, there are no leftovers, no unmatched domains, and the term has been structured.

Referring now to **FIG. 14****,** at reference numeral 1402 a determination is made whether there are leftovers words. As discussed supra, a word can be classified as a leftover, if the word does not match at least one known value for at least one of the unmatched domains. At reference numeral 1404, if there are leftovers (Y at reference numeral 1402), and there are unmatched domains (Y at reference numeral 1302), then at reference numeral 1406, the unmatched words and unmatched domains can be parsed based on order. For example, a left-most unmatched word can be matched with a left-most unmatched domain, until there are no unmatched words or unmatched domains. When there are no unmatched words or unmatched domains, the methodology returns to reference numeral 1302.

Returning to reference numeral 1402, if there are not leftovers (N at reference numeral 1402), then the methodology advances to reference numeral 1408. At reference numeral 1408, there are unmatched domains (Y at reference numeral 1302), and at reference numeral 1410 a null term is assigned to the unmatched domains, and the methodology returns to reference numeral 1310.

### EXEMPLARY NETWORKED AND DISTRIBUTED ENVIRONMENTS

One of ordinary skill in the art can appreciate that the various embodiments for dynamic code generation and memory management for COM objects described herein can be implemented in connection with any computer or other client or server device, which can be deployed as part of a computer network or in a distributed computing environment, and can be connected to any kind of data store. In this regard, the various embodiments described herein can be implemented in any computer system or environment having any number of memory or storage units, and any number of applications and processes occurring across any number of storage units. This includes, but is not limited to, an environment with server computers and client computers deployed in a network environment or a distributed computing environment, having remote or local storage.

Distributed computing provides sharing of computer resources and services by communicative exchange among computing devices and systems. These resources and services include the exchange of information, cache storage and disk storage for objects, such as files. These resources and services also include the sharing of processing power across multiple processing units for load balancing, expansion of resources, specialization of processing, and the like. Distributed computing takes advantage of network connectivity, allowing clients to leverage their collective power to benefit the entire enterprise. In this regard, a variety of devices may have applications, objects or resources that may participate in the mechanisms for dynamic code generation and memory management for COM objects as described for various embodiments of the subject disclosure.

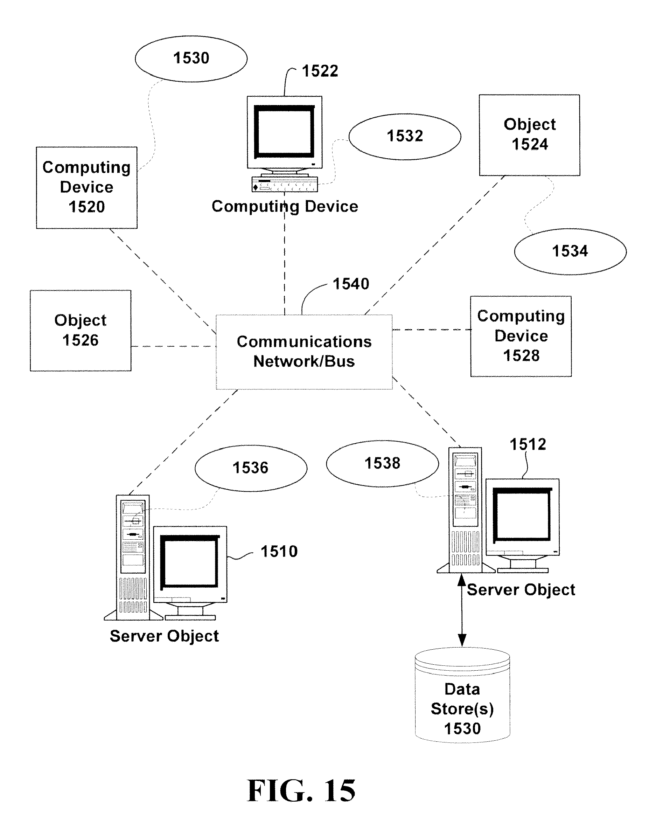

**FIG. 15** provides a schematic diagram of an exemplary networked or distributed computing environment. The distributed computing environment comprises computing objects 1510, 1512, etc. and computing objects or devices 1520, 1522, 1524, 1526, 1528, etc., which may include programs, methods, data stores, programmable logic, etc., as represented by applications 1530, 1532, 1534, 1536, 1538 and data store(s) 1540. It can be appreciated that computing objects 1510, 1512, etc. and computing objects or devices 1520, 1522, 1524, 1526, 1528, etc. may comprise different devices, such as personal digital assistants (PDAs), audio/video devices, mobile phones, MP3 players, personal computers, laptops, etc.

Each computing object 1510, 1512, etc. and computing objects or devices 1520, 1522, 1524, 1526, 1528, etc. can communicate with one or more other computing objects 1510, 1512, etc. and computing objects or devices 1520, 1522, 1524, 1526, 1528, etc. by way of the communications network 1542, either directly or indirectly. Even though illustrated as a single element in Fig. 15, communications network 1542 may comprise other computing objects and computing devices that provide services to the system of Fig. 15, and/or may represent multiple interconnected networks, which are not shown. Each computing object 1510, 1512, etc. or computing object or devices 1520, 1522, 1524, 1526, 1528, etc. can also contain an application, such as applications 1530, 1532, 1534, 1536, 1538, that might make use of an API, or other object, software, firmware and/or hardware, suitable for communication with or implementation of the techniques for dynamic code generation and memory management for COM objects provided in accordance with various embodiments of the subject disclosure.

There are a variety of systems, components, and network configurations that support distributed computing environments. For example, computing systems can be connected together by wired or wireless systems, by local networks or widely distributed networks. Currently, many networks are coupled to the Internet, which provides an infrastructure for widely distributed computing and encompasses many different networks, though any network infrastructure can be used for exemplary communications made incident to the systems for dynamic code generation and memory management for COM objects as described in various embodiments.

Thus, a host of network topologies and network infrastructures, such as client/server, peer-to-peer, or hybrid architectures, can be utilized. The "client" is a member of a class or group that uses the services of another class or group to which it is not related. A client can be a process, i.e., roughly a set of instructions or tasks, that requests a service provided by another program or process. The client process utilizes the requested service without having to "know" any working details about the other program or the service itself.

In a client/server architecture, particularly a networked system, a client is usually a computer that accesses shared network resources provided by another computer, e.g., a server. In the illustration of Fig. 15, as a non-limiting example, computing objects or devices 1520, 1522, 1524, 1526, 1528, etc. can be thought of as clients and computing objects 1510, 1512, etc. can be thought of as servers where computing objects 1510, 1512, etc., acting as servers provide data services, such as receiving data from client computing objects or devices 1520, 1522, 1524, 1526, 1528, etc., storing of data, processing of data, transmitting data to client computing objects or devices 1520, 1522, 1524, 1526, 1528, etc., although any computer can be considered a client, a server, or both, depending on the circumstances.

A server is typically a remote computer system accessible over a remote or local network, such as the Internet or wireless network infrastructures. The client process may be active in a first computer system, and the server process may be active in a second computer system, communicating with one another over a communications medium, thus providing distributed functionality and allowing multiple clients to take advantage of the information-gathering capabilities of the server. Any software objects utilized pursuant to the techniques described herein can be provided standalone, or distributed across multiple computing devices or objects.

In a network environment in which the communications network 1542 or bus is the Internet, for example, the computing objects 1510, 1512, etc. can be Web servers with which other computing objects or devices 1520, 1522, 1524, 1526, 1528, etc. communicate via any of a number of known protocols, such as the hypertext transfer protocol (HTTP). Computing objects 1510, 1512, etc. acting as servers may also serve as clients, e.g., computing objects or devices 1520, 1522, 1524, 1526, 1528, etc., as may be characteristic of a distributed computing environment.

### EXEMPLARY COMPUTING DEVICE

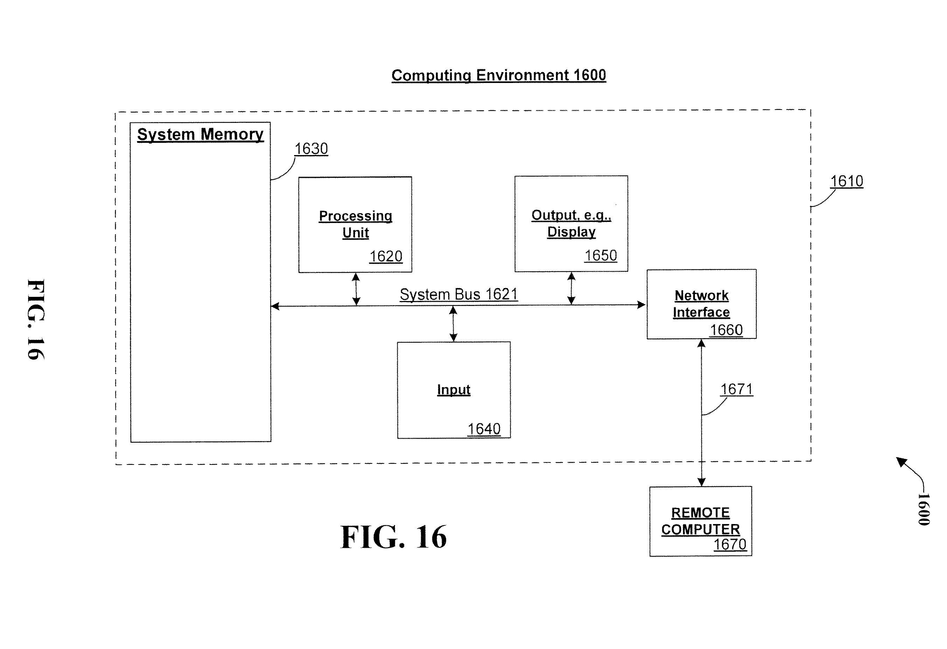

As mentioned, advantageously, the techniques described herein can be applied to any device where it is desirable to perform dynamic code generation and memory management for COM objects in a computing system. It can be understood, therefore, that handheld, portable and other computing devices and computing objects of all kinds are contemplated for use in connection with the various embodiments, i.e., anywhere that resource usage of a device may be desirably optimized. Accordingly, the below general purpose remote computer described below in Fig. 16 is but one example of a computing device.

Although not required, embodiments can partly be implemented via an operating system, for use by a developer of services for a device or object, and/or included within application software that operates to perform one or more functional aspects of the various embodiments described herein. Software may be described in the general context of computer-executable instructions, such as program modules, being executed by one or more computers, such as client workstations, servers or other devices. Those skilled in the art will appreciate that computer systems have a variety of configurations and protocols that can be used to communicate data, and thus, no particular configuration or protocol should be considered limiting.

**FIG. 16** thus illustrates an example of a suitable computing system environment 1600 in which one or aspects of the embodiments described herein can be implemented, although as made clear above, the computing system environment 1600 is only one example of a suitable computing environment and is not intended to suggest any limitation as to scope of use or functionality. Neither should the computing system environment 1600 be interpreted as having any dependency or requirement relating to any one or combination of components illustrated in the exemplary computing system environment 1600.

With reference to Fig. 16, an exemplary remote device for implementing one or more embodiments includes a general purpose computing device in the form of a computer 1610. Components of computer 1610 may include, but are not limited to, a processing unit 1620, a system memory 1630, and a system bus 1622 that couples various system components including the system memory to the processing unit 1620.

Computer 1610 typically includes a variety of computer readable media and can be any available media that can be accessed by computer 1610. The system memory 1630 may include computer storage media in the form of volatile and/or nonvolatile memory such as read only memory (ROM) and/or random access memory (RAM). By way of example, and not limitation, system memory 1630 may also include an operating system, application programs, other program modules, and program data. According to a further example, computer 1610 can also include a variety of other media (not shown), which can include, without limitation, RAM, ROM, EEPROM, flash memory or other memory technology, CD-ROM, digital versatile disk (DVD) or other optical disk storage, magnetic cassettes, magnetic tape, magnetic disk storage or other magnetic storage devices, or other tangible and/or non-transitory media which can be used to store desired information.

A user can enter commands and information into the computer 1610 through input devices 1640. A monitor or other type of display device is also connected to the system bus 1622 via an interface, such as output interface 1650. In addition to a monitor, computers can also include other peripheral output devices such as speakers and a printer, which may be connected through output interface 1650.

The computer 1610 may operate in a networked or distributed environment using logical connections, such as network interfaces 1660, to one or more other remote computers, such as remote computer 1670. The remote computer 1670 may be a personal computer, a server, a router, a network PC, a peer device or other common network node, or any other remote media consumption or transmission device, and may include any or all of the elements described above relative to the computer 1610. The logical connections depicted in Fig. 16 include a network 1672, such local area network (LAN) or a wide area network (WAN), but may also include other networks/buses. Such networking environments are commonplace in homes, offices, enterprise-wide computer networks, intranets and the Internet.

As mentioned above, while exemplary embodiments have been described in connection with various computing devices and network architectures, the underlying concepts may be applied to any network system and any computing device or system.

In addition, there are multiple ways to implement the same or similar functionality, e.g., an appropriate API, tool kit, driver code, operating system, control, standalone or downloadable software object, etc. which enables applications and services to take advantage of the techniques provided herein. Thus, embodiments herein are contemplated from the standpoint of an API (or other software object), as well as from a software or hardware object that implements one or more embodiments as described herein. Thus, various embodiments described herein can have aspects that are wholly in hardware, partly in hardware and partly in software, as well as in software.

The word "exemplary" is used herein to mean serving as an example, instance, or illustration. For the avoidance of doubt, the subject matter disclosed herein is not limited by such examples. In addition, any aspect or design described herein as "exemplary" is not necessarily to be construed as preferred or advantageous over other aspects or designs, nor is it meant to preclude equivalent exemplary structures and techniques known to those of ordinary skill in the art. Furthermore, to the extent that the terms "includes," "has," "contains," and other similar words are used, for the avoidance of doubt, such terms are intended to be inclusive in a manner similar to the term "comprising" as an open transition word without precluding any additional or other elements.

As mentioned, the various techniques described herein may be implemented in connection with hardware or software or, where appropriate, with a combination of both. As used herein, the terms "component," "system" and the like are likewise intended to refer to a computer-related entity, either hardware, a combination of hardware and software, software, or software in execution. For example, a component may be, but is not limited to being, a process running on a processor, a processor, an object, an executable, a thread of execution, a program, and/or a computer. By way of illustration, both an application running on computer and the computer can be a component. One or more components may reside within a process and/or thread of execution and a component may be localized on one computer and/or distributed between two or more computers.

The aforementioned systems have been described with respect to interaction between several components. It can be appreciated that such systems and components can include those components or specified sub-components, some of the specified components or sub-components, and/or additional components, and according to various permutations and combinations of the foregoing. Sub-components can also be implemented as components communicatively coupled to other components rather than included within parent components (hierarchical). Additionally, it can be noted that one or more components may be combined into a single component providing aggregate functionality or divided into several separate sub-components, and that any one or more middle layers, such as a management layer, may be provided to communicatively couple to such sub-components in order to provide integrated functionality. Any components described herein may also interact with one or more other components not specifically described herein but generally known by those of skill in the art.

In view of the exemplary systems described *supra,* methodologies that may be implemented in accordance with the described subject matter can also be appreciated with reference to the flowcharts of the various figures. While for purposes of simplicity of explanation, the methodologies are shown and described as a series of blocks, it is to be understood and appreciated that the various embodiments are not limited by the order of the blocks, as some blocks may occur in different orders and/or concurrently with other blocks from what is depicted and described herein. Where non-sequential, or branched, flow is illustrated via flowchart, it can be appreciated that various other branches, flow paths, and orders of the blocks, may be implemented which achieve the same or a similar result. Moreover, not all illustrated blocks may be required to implement the methodologies described hereinafter.

In addition to the various embodiments described herein, it is to be understood that other similar embodiments can be used or modifications and additions can be made to the described embodiment(s) for performing the same or equivalent function of the corresponding embodiment(s) without deviating there from. Still further, multiple processing chips or multiple devices can share the performance of one or more functions described herein, and similarly, storage can be effected across a plurality of devices. Accordingly, the invention should not be limited to any single embodiment, but rather should be construed in breadth, spirit and scope in accordance with the appended claims.

## Claims

1. A method, comprising:
inspecting 1002 a term including determining a set of domains related to the term;
identifying 1004 a set of word-grams based on a set of unmatched words included in the term;
comparing 1006 a word-gram in the set of word-grams to a set of known domain values for at least one unmatched domain in the set of domains and determining that the word-gram is within a predetermined threshold of at least one known domain value for the at least one unmatched domain; and
in response to the word-gram being within the predetermined threshold of the at least one known domain value, associating 1008 the word-gram with the at least one unmatched domain.

2. The method of claim 1, further comprising:
comparing an other word-gram in the set of word-grams to the set of known domain values for at least one other unmatched domain in the set of domains;
determining that the other word-gram is within the predetermined threshold of at least one other known domain value; and
in response to the other word-gram being within the predetermined threshold of the at least one other known domain value, associating the other word-gram with the at least one other unmatched domain corresponding to the at least one other known domain value.

3. The method of claim 2, further comprising:
determining that a quantity of word-grams in the set of word-grams that are within the predetermined threshold of known domain values is less than a quantity of unmatched domains included in the set of domains; and
in response to determining the quantity of word-grams in the set of word-grams that are within the predetermined threshold of known domain values is less than the quantity of unmatched domains included in the set of domains, determining that the set of word-grams does not include at least one leftover term, and associating the unmatched domains with a null value.

4. The method of claim 2, further comprising:
determining that a quantity of word-grams in the set of word-grams that are within the predetermined threshold of known domain values in the set of known domain values is less than a quantity of unmatched domains included in the set of domains;
in response to determining the quantity of word-grams in the set of word-grams that are within the predetermined threshold of known domain values is less than the quantity of unmatched domains included in the set of domains, determining that the set of word-grams includes at least one leftover word; and
in response to determining that the set of word-grams includes the at least one leftover word, employing a delimiter based parsing.

5. The method of claim 4, wherein delimiter based parsing further comprises:
associating the at least one leftover word with the at least one unmatched domain;
determining that there is at least one other leftover word; and
in response to determining that there is at least one other leftover word, determining that there is at least one other unmatched domain, and associating the at least one other leftover word with the at least one other unmatched domain.

6. The method of claim 5, wherein delimiter based parsing further comprises:
determining that there is not at least one other unmatched domain;
in response to determining that there is not at least one other unmatched domain, determining that a word-gram associated with a domain is located, in the term, to the left of the at least one other leftover word; and
in response to determining that a word-gram located, in the term, to the left of the at least one other leftover is associated with the domain, appending the at least one other leftover to the word-gram located, in the term, to the left of the at least one other leftover;
determining that there is not a word-gram associated with a domain and located, in the term, to the left of the at least one other leftover word; and
in response to determining that there is not a word-gram associated with a domain and located, in the term, to the left of the at least one other leftover word, appending the at least one other leftover word to a word-gram associated with a domain and located, in the term, to the right of the leftover word.

7. The method of claim 1, wherein the identifying 1004 the set of word-grams further comprises:
parsing the set of words included in the term; and
identifying a set of possible combinations of the set of words.

8. A computing device, comprising:
a memory having computer executable components stored thereon; and
a processor communicatively coupled to the memory, the processor configured to facilitate execution of the computer executable components, the computer executable components, comprising:
a domain identification component 202 configured to determine a set of domains related to a term, inspect the term, and identify a set of word-grams based on a set of unmatched words included in the term;
a correlation component 206 configured to compare a word-gram in the set of word-grams to a set of known domain values for at least one unmatched domain in the set of domains related to the term, and determine the word-gram is within a predetermined threshold of at least one known domain value in the set of known domain values; and
a manager component 208 configured to associate the word-gram with the at least one unmatched domain, in response to the word-gram being within the predetermined threshold of the at least one known domain value.

9. The computing device of claim 8, wherein the management component 208 is further configured to:
determine that a quantity of word-grams in the set of word-grams that are within the predetermined threshold of known domain values in the set of known domain values is less than a quantity of unmatched domains included in the set of domains; and
in response to determining the quantity of word-grams in the set of word-grams that are within the predetermined threshold of known domain values is less than the quantity of unmatched domains included in the set of domains, determining that the set of word-grams does not include at least one leftover word, and associating unmatched domains with a null value.

10. The computing device of claim 8, wherein the management component 208 is further configured to:
determine that a quantity of word-grams in the set of word-grams that are within the predetermined threshold of known domain values in the set of known domain values is less than a quantity of unmatched domains included in the set of domains; and
in response to the quantity of word-grams in the set of word-grams that are within the predetermined threshold of known domain values being less than the quantity of unmatched domains, determine that the set of word-grams includes a set of leftover words.

11. The computing device of claim 10, further comprising a delimiter based parsing component 404 configured to:
in response to the set of word-grams including the set of leftover words, associate a first leftover word in the set of leftover words with a first unmatched domain.

12. The computing device of claim 11, wherein the delimiter based parsing component 404 is further configured to:
determine that there is a next leftover word in the set of leftover words;
in response to there being a next leftover word in the set of leftover words, determine that there is a next unmatched; and
in response to there being the next unmatched domain, associate the next leftover word with the next unmatched domain.

13. The computing device of claim 11, wherein the delimiter based parsing component 404 is further configured to:
determine that there is not a next unmatched domain;
in response to there not being the next unmatched domain, determine that a word-gram located to the left, in the term, of the next leftover word is associated with a domain;
in response to the word-gram located, in the term, to the left of the next leftover word and being associated with the domain, appending the next leftover word to the word-gram located to the left, in the term, of the next leftover word;
determine there is not a word-gram located to the left, in the term, of the next leftover word that is associated with the domain; and
in response to there not being the word-gram located to the left, in the term, of the next leftover word that is associated with the domain, append the next leftover word to a word-gram located, in the term, to the right of the leftover word.

14. The computing device of claim 8, wherein the examination component 202 is further configured:
identify a set of unmatched words in the term;
identify a set of possible combinations of the set of unmatched words, based at least in part on the location of the words in the term relative to one another;
and identify the set of word-grams based on the set of possible combinations of the set of unmatched words.
